# EUROPEAN PATENT SPECIFICATION

(11) **EP 4 342 778 B1**
(45) Date of publication and mention of the grant of the patent: **12.03.2025**
(21) Application number: 22804116.6
(22) Date of filing: 20.05.2022
(51) Int. Cl.: B62K 15/00, B62K 7/04

(54) **FOLDING FRONT-LOADING BICYCLE**
KLAPPBARES FAHRRAD MIT FRONTLADUNG
BICYCLETTE À CHARGEMENT FRONTAL PLIABLE

(30) Priority: 21.05.2021 ES 202100249 U
(43) Date of publication of application: 27.03.2024
(73) Proprietor: Cabanas Ballbé, Sergi, 08172 Sant Cugat del Valles (Barcelona) (ES)
(72) Inventor: Cabanas Ballbé, Sergi, 08172 Sant Cugat del Valles (Barcelona) (ES)
(74) Representative: Espiell Gomez, Ignacio
(86) International application number: PCT/ES2022/070311
(87) International publication number: WO 2022/243594

(56) References cited:
- DE-B3- 102020 002 354
- DE-B3- 102020 002 354
- DE-U1- 202014 005 627
- GB-A- 2 569 085
- US-A1- 2005 001 404
- US-A1- 2007 210 556
- US-A1- 2011 025 016
- US-B1- 8 894 084

## Description

### OBJECT OF THE INVENTION

The invention, as stated in the title of the present specification, relates to a folding front-loading bicycle which contributes, to its intended use, advantages and features, which are described in detail further on, which imply an improvement in the current state of the art.

The object of the present invention relates to a bicycle of the type comprising a loading surface in its front part, with the axle of the front steering wheel being moved forward to leave space for this purpose and incorporating an indirect steering system, which bicycle is furthermore foldable such that it allows the size thereof to be reduced without needing tools and has a support which supports it in the folded position. In that sense, the bicycle comprises at least one folding system for folding its front wheel onto the main frame by means of swiveling the front wheel around a shaft such that it is superimposed on the frame and the loading surface is arranged therebelow acting as a support for the bicycle in the folded position. Optionally, it also comprises a folding system for folding the rear wheel onto the main frame by means of swiveling same in a second shaft such that it is also superimposed on the main frame.

### FIELD OF APPLICATION OF THE INVENTION

The field of application of the present invention is comprised within the sector of the industry dedicated to the manufacture of bicycles, and more specifically within the types of load-bearing bicycles and folding bicycles.

### BACKGROUND OF THE INVENTION

There are a variety of load-bearing bicycles in which the load is located in the front part, but they are rigid bicycles of large dimensions, and this is a determining factor in popularizing this type of vehicle with living space in big cities becoming increasingly smaller and community parking lots not being the best place to store bicycles as they are highly exposed to theft.

Moreover, folding bicycles are very popular due to their advantages of being foldable; they are small, agile, and maneuverable bicycles that take up relatively little space and can be stored comfortably inside homes, in addition to facilitating the combined use thereof with other public transport. However, they are very limited in terms of load-bearing factor, not being useful in many of the everyday situations of daily lives such as doing weekly shopping or picking up more than one child from school.

The solution is to create a new type of bicycle, i.e., a folding load-bearing bicycle, adopting technical solutions of both types to enhance the best of each type and thereby achieve the best utility bicycle on the market.

DE 10 2020 002354 B3 discloses the preamble of independent claim 1.

### DESCRIPTION OF THE INVENTION

The folding front-loading bicycle proposed by the invention is configured as the ideal solution to the aforementioned objective, the characterizing details that make it possible and that distinguish it being conveniently included in the final claims that accompany this description.

Specifically, as set forth above, the invention proposes a bicycle comprising a loading surface in its front part, with the axle of the front steering wheel being moved forward to that end and with an indirect steering system, which bicycle being a bicycle that can be folded without needing tools and the loading surface is converted to a support for the bicycle in the folded position.

To that end, the bicycle comprises at least one folding system for folding its front wheel onto the main frame by means of a secondary front swinging frame in which said front wheel is incorporated around a front rotating shaft which allows both frames to be articulated such that the wheel is superimposed on the main frame and the loading surface is located below said frame acting as a support surface on which the entire bicycle rests in its folded position.

Furthermore, in a preferred embodiment of the invention, the bicycle also comprises a folding system for folding the rear wheel onto the main frame by means of a secondary rear swinging frame in a second rotating shaft which allows a second articulation with the main frame such that said rear wheel is also superimposed on the main frame.

It should be noted that either the front wheel or the rear wheel, and more specifically the secondary front or rear swingarm with which the wheels swivel with respect to main frame, swivels around a shaft which is not perpendicular to said main frame such that, in a folded position, the front wheel or the rear wheel which rotates about said non-perpendicular shaft is located offset with respect to the vertical of the main frame.

Furthermore, preferably, the mentioned shaft not perpendicular to the main frame around which the front swingarm of the front wheel or the rear swingarm of the rear wheel rotates is inclined with respect to the horizontal such that, in a folded position, the verticality of the main frame with respect to the front loading surface is improved.

In any case, according to a feature of the invention, an accessory, such as a wider loading platform, a crate, a container, a child safety seat, can be fixed on the front loading surface of the bicycle. Furthermore, when it consists of a flat platform, it can be folded with the folding system for folding the front wheel and arranged below the loading surface acting as a support for the bicycle in the folded position.

In a preferred embodiment option, the front loading surface or a flat loading platform incorporated on said surface incorporates roller wheels intended for facilitating the transport of the bicycle in the folded position.

Optionally, the loading platform can be fixed to the loading surface such that it can pivot with respect to the front wheel to thereby optimize the folding of the bicycle and the support base it provides.

Moreover, preferably, the handlebar tube can be moved vertically with respect to the main frame and fitted into the front swingarm in its folded position such that the front swingarm is mechanically locked by said handlebar tube, preventing the bicycle from returning to its unfolded position without the handlebar tube having first been moved to its extended position. Furthermore, similarly, when the bicycle has the rear folding system, the saddle tube can also be moved vertically with respect to the main frame and fitted into the rear swingarm in its folded position such that it is mechanically locked by said tube, preventing the bicycle from returning to its unfolded position.

In that sense, in a preferred embodiment of the invention, the bicycle is made up of a rigid main frame, without ball joints, hinges, or moving attachments, i.e., it is structurally integral by means of the relevant welds, thereby preventing the main weak point of any folding bicycle and sparing the weight of the robust hinges required to ensure its structural safety and durability. Said main frame will have two shafts, one transverse shaft comprised in a horizontal plane and another shaft which is oblique thereto, which may or may not be comprised in a horizontal plane, where the rear swinging frame and the front swinging frame, respectively, will be attached by means of respective bolts.

The rear swingarm will follow the typical configuration of many other folding bicycles, i.e., it will be formed by a double triangle of tubes that allow securing the rear wheel through its axle without interfering with same, and it will have a rubber block as a shock absorber at a support point where it will be attached to the main frame and swivel about a shaft perpendicular thereto. Said rear swingarm, in the folded position, will be locked by the saddle tube in its lowest position, mechanically fixing it to the main frame.

The folding system is rendered novel by the front swingarm itself, moving the position of the front wheel to a position that is more to the front with respect to its natural position in the typical configuration of any bicycle, this not being in the projection line of the steering pipe, but rather moved forward creating a loading surface. Said configuration is the one maintained by other existing front-loading bicycles, but in a manner integral with the main frame, i.e., they are part of the main structure of the bicycle, not being movable or foldable. This distance between the steering tube of the fork and the steering tube of the handlebar is bridged by means of this front swingarm, which will furthermore support the loading platform on the loading surface and swivel by means of a shaft not perpendicular to the main frame, but rather oblique to same and may or may not be comprised in a horizontal plane, with the suitable angle so that, in the folded position, the front wheel does not interfere with the frame itself or with the rear swingarm in the folded position, but rather arranged on one side. In addition to through the shaft, said front swingarm will also be attached to the main frame at a second point at which another rubber block will be arranged to better absorb terrain irregularities and improve comfort while cycling.

In its operative position, the loading surface itself is furthermore the base where the bicycle will rest in the folded position. Preferably, a loading platform acting as a base for the bicycle in the folded position, which will not be integral with the front swingarm, but consist of a mobile and replaceable substructure, is incorporated on the loading surface.

In the folded position, said swingarm will be locked by the handlebar tube in its lowest position, mechanically fixing it to the main frame, and causing the ability to manipulate the assembly of the folded bicycle without the movement of any of its moving parts.

The two swingarms are secured to the frame by a bolt from which they pivot with respect to said frame in their operative position, and both swingarms have a second support, attachment, or fixing point, through which they connect with the structure of the frame and which acts as a stop, with said attachment being proposed with a silentblock, but may be open to functioning without it. It can be a simple support point but also a firmer connection, either through a piece threaded on both sides or through any other mechanical system, attaching the frame with the swingarms in a completely integral manner, such that the accidental folding thereof will not occur when lifting the bike.

To enable proper system operation technically speaking, the transmission of the rotational movement of the handlebar to the fork, i.e., the steering system, will be made through sheathed metal cables, similar to those of the brake system itself, and through wheels or pulleys fixed to the fork tube and the steering tube, respectively, as incorporated in other load-bearing bicycles, allowing both axles to work in an integral manner.

To achieve a steering tube that is extendable in height and can be arranged practically flush with the main frame in its folded position, there is a need to provide three concentric tubes, i.e., the steering pipe itself which is part of the frame, the steering tube which works with the steering wheel and with the steering bearings themselves, and the handlebar tube which can be arranged freely in height and which, by means of a quick closure, such as that of the seat tube, can be caused to work together with the steering tube itself, and this may or may not have a small groove that acts as a guide so that the position of the handlebar is always perpendicular to that of the wheel, making the system safer.

### DESCRIPTION OF THE DRAWINGS

To complete the description, and for the purpose of helping to make the features of the invention more readily understandable, this description is accompanied by a set of drawings constituting an integral part of the same, which by way of illustration and not limitation represents the following:
Figures 1, 2, and 3 show respective side elevational views of various positions of the bicycle object of the invention, i.e., the operative position, the half-folded position, and the inoperative folded position;
Figures 4 and 5 show the plan view and the rear elevational view, respectively, of the bicycle in its folded position, in which the lateral movement of the front fork with respect to the frame as a result of the obliqueness of the rotating shaft can be seen;
Figures 6, 7, and 8 show a three-dimensional view of the front part of the bicycle; in Figure 6 the front swingarm is bare and the steering wiring can be seen, in Figure 7 the removable loading platform can be seen in its operative position within the assembly, and in Figure 8 the same platform is in the position arranged to optimize the folding of the bicycle; and
Figures 9 and 10 show a top plan view of the bicycle in its folded position, Figure 9 shows how the assembly looks like if the loading platform is placed in the position arranged to optimize folding before folding the front swingarm and Figure 10 shows the assembly that has been folded with the loading platform in its operative position.

### PREFERRED EMBODIMENT OF THE INVENTION

In view of the aforementioned figures, and in accordance with the adopted numbering, one may observe therein a non-limiting exemplary embodiment of the folding front-loading bicycle of the invention, comprising what is described in detail below.

In that sense, as can be seen in said figures, the bicycle of the invention is of the type comprising a loading surface (3) in its front part, with the axle of the front steering wheel (15) being moved forward to leave space for said surface and incorporating an indirect steering system, and it is distinguished by comprising at least one folding system for folding its front wheel (15) onto a main frame (1) by means of a front swingarm with the loading surface (3) in which said front wheel (15) is incorporated around a front rotating shaft (9) such that, in the folded position, the front wheel (15) is superimposed on the main frame (1) and the loading surface (3) is located below the main frame (1) acting as a support surface on which the entire bicycle rests in its folded position.

Preferably, the bicycle also comprises a folding system for folding the rear wheel (14) onto the main frame (1) by means of a rear swingarm (2) in a rear rotating shaft (10) such that, in the folded position, said rear wheel (14) is superimposed on the main frame (1).

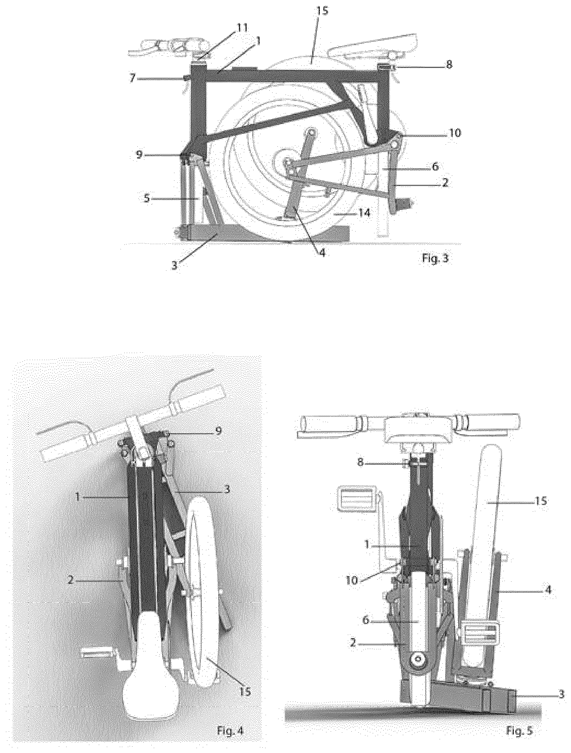

Preferably, either the front swingarm of the loading surface (3) with the front wheel (15) or the rear swingarm (2) with the rear wheel (14), rotates with respect to the main frame (1) around a front shaft (9) or a rear shaft (10) which is not perpendicular to said main frame (1) such that, in a folded position, the front wheel (15) or the rear wheel (14) which rotates about said non-perpendicular shaft is located offset with respect to the vertical of the main frame (1), as shown in Figures 4 and 5.

Furthermore, preferably, the mentioned shaft not perpendicular to the main frame around which the front swingarm (3) of the front wheel (15) or the rear swingarm (2) of the rear wheel (14) rotates is inclined with respect to the horizontal such that, in a folded position, the verticality of the main frame (1) with respect to the loading surface of the front swingarm (3) is improved.

In an alternative embodiment, the rear shaft (10) of the folding system for folding the rear wheel (14) onto the main frame (1) is vertical such that, in the folded position, said rear wheel (14) is superimposed laterally on the main frame (1).

Preferably, a platform (16) or another removable loading accessory can be fixed on the loading surface of the front swingarm (3) of the bicycle. When it consists of a flat platform (16), it can be folded with the front swingarm (3) of the front wheel (15) and arranged below the loading surface acting as a support for the bicycle in the folded position.

Optionally, either the loading surface of the front swingarm (3) or a loading platform (16) incorporates roller wheels (19) intended for facilitating the transport of the bicycle in the folded position.

Optionally, the loading platform (16) is attached to the loading surface of the front swingarm (3) by means of a pivoting attachment (17) such that it can pivot with respect to the front wheel (15) to thereby optimize the folding of the bicycle and the support base it provides.

Preferably, the handlebar tube (5) can be moved vertically with respect to the main frame (1) and fitted into the front swingarm (3) in its folded position such that said front swingarm (3) is mechanically locked by said handlebar tube (5), preventing the bicycle from returning to its unfolded position without the handlebar tube (5) having first been moved to its extended position.

Preferably, when the bicycle has the folding system for folding the rear wheel (14) by means of rear swingarm (2), the saddle tube (6) can also be moved vertically with respect to the main frame (1) and fitted into said rear swingarm (2) in its folded position such that the rear swingarm (2) is mechanically locked by said saddle tube (6), preventing the bicycle from returning to its unfolded position without the saddle tube (6) having first been moved to its extended position.

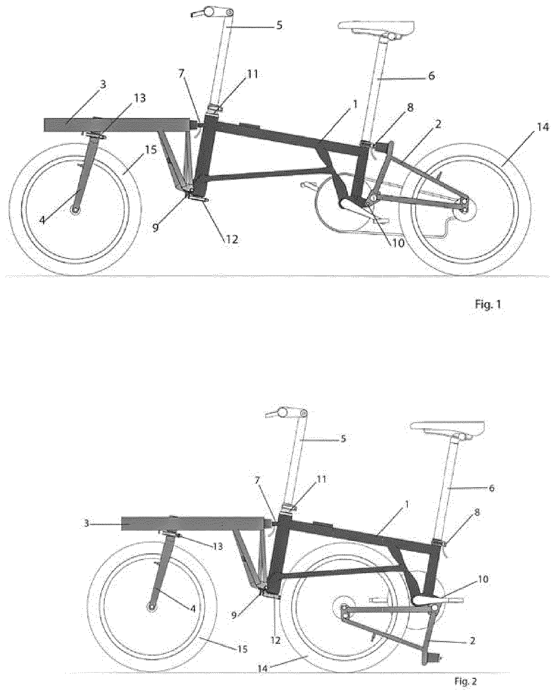

Figures 1 to 10 depict a preferred embodiment of the bicycle of the invention, which is made up of a frame or main structure (1) and two secondary swingarms, one rear swingarm (2) and another front swingarm (3).

The main frame (1), without hinges or moving parts, is a framework having two shafts, i.e., the front shaft (9) oblique with respect to the frame, which may or may not be comprised in a horizontal plane, and the rear shaft (10) transverse to the frame and comprised in a horizontal plane.

The rear swingarm (2) is a substructure which attaches the rear drive wheel (14), through its axle, to the rear shaft (10) of the main frame (1). This rear swingarm (2) will have a second support point (8) with the main frame (1), which may or may not have a rubber block and which can be a simple support or a stronger attachment through any mechanism.

The assembly will be locked in its folded position by the saddle tube (6) in its lowest position.

The front swingarm (3) is a substructure that defines a loading surface on which a loading platform (16) will be fixed and which in turn attaches the front steering wheel (15), secured by the fork (4), to the main frame (1) through the front shaft (9) itself. This front swingarm (3) will furthermore have a second support point (7) with the main frame (1), which may or may not have a rubber block and which can be a simple support or a stronger attachment through any mechanism.

The assembly will be locked in its folded position by the handlebar tube (5) in its lowest position, since it can move freely along the steering tube (11).

A wheel or pulley (13) which will transmit forces from the steering shaft to the fork shaft through a system of cables will be added the fork (4). The wheel or pulley of the steering shaft (12), integral with the steering tube (11) itself, will be arranged at the other end of the cable.

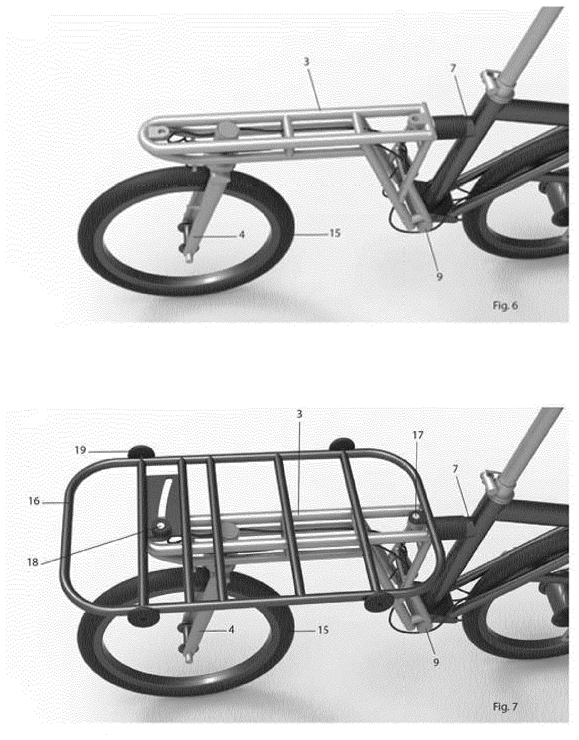

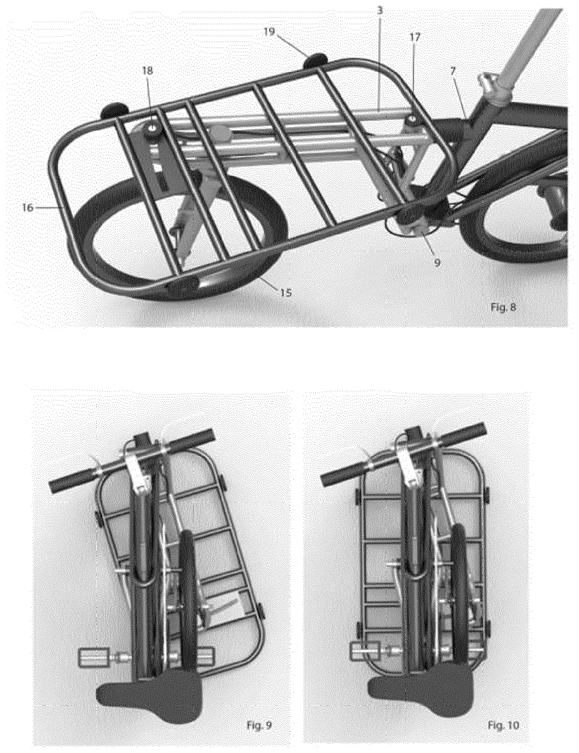

The loading platform (16) is secured to the front swingarm (3) through a shaft from which it pivots (17) and is fixed in the desired position by means of a screw (18) which, as can be seen in Figures 7 and 8, slides in a guide provided to that end, in order to optimize the dimensions of the assembly in its folded position. Said loading platform (16) can have four small-sized wheels or roller wheels (19) to facilitate its transport in said position.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A folding front-loading bicycle of the type comprising a loading surface in its front part, with the axle of the front steering wheel (15) being moved forward to leave space for said surface and incorporating an indirect steering system, **characterized by** comprising at least one folding system for folding its front wheel (15) onto a main frame (1) by means of a front swingarm with the loading surface (3) in which said front wheel (15) is incorporated around a front rotating shaft (9) such that, in the folded position, the front wheel (15) is superimposed on the main frame (1) and the loading surface (3) is located below the main frame (1) acting as a support surface on which the entire bicycle rests in its folded position.

2. The folding front-loading bicycle according to claim 1, **characterized in that** it comprises a folding system for folding the rear wheel (14) onto the main frame (1) by means of a rear swingarm (2) in a rear rotating shaft (10) such that, in the folded position, said rear wheel (14) is superimposed on the main frame (1).

3. The folding front-loading bicycle according to claim 2, **characterized in that,** either the front swingarm of the loading surface (3) with the front wheel (15) or the rear swingarm (2) with the rear wheel (14), rotates with respect to the main frame (1) about a front shaft (9) or a rear shaft (10) which is not perpendicular to said main frame (1) such that, in a folded position, the front wheel (15) or the rear wheel (14) which rotates about said non-perpendicular shaft is located offset with respect to the vertical of the main frame (1).

4. The folding front-loading bicycle according to claim 3, **characterized in that** the shaft not perpendicular to the main frame (1) around which the front swingarm (3) of the front wheel (15) or the rear swingarm (2) of the rear wheel (14) rotates is inclined with respect to the horizontal such that, in a folded position, the verticality of the main frame (1) with respect to the loading surface of the front swingarm (3) is improved.

5. The folding front-loading bicycle according to any of the preceding claims, **characterized in that** a platform (16) or another removable loading accessory is fixed on the loading surface of the front swingarm (3).

6. The folding front-loading bicycle according to claim 5, **characterized in that** a flat platform (16) which, with the front swingarm (3) of the front wheel (15) in the folded position, is arranged under the loading surface acting as a support for the bicycle in the folded position, is fixed on the loading surface of the front swingarm (3).

7. The folding front-loading bicycle according to claim 6, **characterized in that** either the loading surface of the front swingarm (3) or a loading platform (16) incorporates roller wheels (19) intended for facilitating the transport of the bicycle in the folded position.

8. The folding front-loading bicycle according to claim 6 or 7, **characterized in that** the loading platform (16) is fixed to the loading surface of the front swingarm (3) by means of a pivoting attachment (17) such that it can pivot with respect to the front wheel (15) to thereby optimize the folding of the bicycle and the support base it provides.

9. The folding front-loading bicycle according to any of the preceding claims, **characterized in that** the handlebar tube (5) can be moved vertically with respect to the main frame (1) and fitted into the front swingarm (3) in its folded position such that said front swingarm (3) is mechanically locked by said handlebar tube (5), preventing the bicycle from returning to its unfolded position without the handlebar tube (5) having first been moved to its extended position.

10. The folding front-loading bicycle according to any of claims 2 to 9, **characterized in that** the saddle tube (6) can be moved vertically with respect to the main frame (1) and fitted into the rear swingarm (2) in its folded position such that the rear swingarm (2) is mechanically locked by said saddle tube (6), preventing the bicycle from returning to its unfolded position without the saddle tube (6) having first been moved to its extended position.

11. The folding front-loading bicycle according to any of claims 2, 5, 6, 7, 8, 9, or 10, **characterized in that** the rear shaft (10) of the folding system for folding the rear wheel (14) onto the main frame (1) is vertical such that, in the folded position, said rear wheel (14) is superimposed laterally on the main frame (1).

## Patentansprüche

1. Faltbares Frontlader-Fahrrad des Typs, der eine Ladefläche in seinem vorderen Teil aufweist, wobei die Achse des vorderen Lenkrads (15) nach vorne bewegt wird, um Platz für die genannte Fläche zu lassen, und ein indirektes Lenksystem enthält, **dadurch gekennzeichnet, dass** es mindestens ein Faltsystem zum Falten seines Vorderrads (15) auf einen Hauptrahmen (1) mittels einer Vorderschwinge mit der Ladefläche (3) umfasst, in die das Vorderrad (15) um eine vordere Drehwelle (9) herum eingebaut ist, so dass das Vorderrad (15) in der gefalteten Position auf dem Hauptrahmen (1) aufliegt und die Ladefläche (3) unter dem Hauptrahmen (1) angeordnet ist und als Stützfläche dient, auf der das gesamte Fahrrad in seiner gefalteten Position ruht.

2. Faltbares Frontlader-Fahrrad nach Anspruch 1, **dadurch gekennzeichnet, dass** es ein Faltsystem zum Falten des Hinterrades (14) auf den Hauptrahmen (1) mittels einer Hinterradschwinge (2) in einer hinteren Drehwelle (10) umfasst, so dass das Hinterrad (14) in der gefalteten Position auf dem Hauptrahmen (1) aufliegt.

3. Faltbares Frontlader-Fahrrad nach Anspruch 2, **dadurch gekennzeichnet, dass** entweder die Vorderschwinge der Ladefläche (3) mit dem Vorderrad (15) oder die Hinterradschwinge (2) mit dem Hinterrad (14) sich in Bezug auf den Hauptrahmen (1) um eine vordere Welle (9) oder eine hintere Welle (10) dreht, die nicht senkrecht zu dem Hauptrahmen (1) verläuft, so dass das Vorderrad (15) oder das sich um die nicht senkrechte Welle drehende Hinterrad (14) in der gefalteten Position in Bezug auf die Vertikale des Hauptrahmens (1) versetzt angeordnet ist.

4. Faltbares Frontlader-Fahrrad nach Anspruch 3, **dadurch gekennzeichnet, dass** die nicht senkrecht zum Hauptrahmen (1) stehende Welle, um die sich die Vorderschwinge (3) des Vorderrads (15) oder die Hinterradschwinge (2) des Hinterrads (14) dreht, in Bezug auf die Horizontale geneigt ist, so dass die Vertikalität des Hauptrahmens (1) in Bezug auf die Ladefläche der Vorderschwinge (3) in einer gefalteten Position verbessert wird.

5. Faltbares Frontlader-Fahrrad nach einem der vorhergehenden Ansprüche, **dadurch gekennzeichnet, dass** eine Plattform (16) oder ein anderes abnehmbares Ladezubehör auf der Ladefläche der Vorderschwinge (3) befestigt ist.

6. Faltbares Frontlader-Fahrrad nach Anspruch 5, **dadurch gekennzeichnet, dass** auf der Ladefläche der Vorderschwinge (3) eine flache Plattform (16) befestigt ist, die, wenn sich die Vorderschwinge (3) des Vorderrades (15) in der gefalteten Position befindet, unter der Ladefläche angeordnet ist und als Stütze für das Fahrrad in der gefalteten Position dient.

7. Faltbares Frontlader-Fahrrad nach Anspruch 6, **dadurch gekennzeichnet, dass** entweder die Ladefläche der Vorderschwinge (3) oder eine Ladeplattform (16) Rollen (19) aufweist, die dazu bestimmt sind, den Transport des Fahrrads in der gefalteten Position zu erleichtern.

8. Faltbares Frontlader-Fahrrad nach Anspruch 6 oder 7, **dadurch gekennzeichnet, dass** die Ladeplattform (16) an der Ladefläche der Vorderschwinge (3) mittels einer schwenkbaren Befestigung (17) so befestigt ist, dass sie in Bezug auf das Vorderrad (15) schwenkbar ist, um dadurch das Falten des Fahrrads und die von ihm bereitgestellte Stützbasis zu optimieren.

9. Faltbares Frontlader-Fahrrad nach einem der vorhergehenden Ansprüche, **dadurch gekennzeichnet, dass** das Lenkerrohr (5) vertikal in Bezug auf den Hauptrahmen (1) bewegt und in die Vorderschwinge (3) in deren gefalteten Position eingepasst werden kann, so dass die genannte Vorderschwinge (3) durch das genannte Lenkerrohr (5) mechanisch verriegelt wird, wodurch verhindert wird, dass das Fahrrad in seine nicht gefaltete Position zurückkehrt, ohne dass das Lenkerrohr (5) zuvor in seine ausgefahrene Position bewegt worden ist.

10. Faltbares Frontlader-Fahrrad nach einem der Ansprüche 2 bis 9, **dadurch gekennzeichnet, dass** das Sattelrohr (6) vertikal in Bezug auf den Hauptrahmen (1) bewegt und in die Hinterradschwinge (2) in deren gefalteten Position eingepasst werden kann, so dass die Hinterradschwinge (2) durch das genannte Sattelrohr (6) mechanisch verriegelt wird, wodurch verhindert wird, dass das Fahrrad in seine nicht gefaltete Position zurückkehrt, ohne dass das Sattelrohr (6) zuvor in seine ausgefahrene Position bewegt worden ist.

11. Faltbares Frontlader-Fahrrad nach einem der Ansprüche 2, 5, 6, 7, 8, 9 oder 10, **dadurch gekennzeichnet, dass** die hintere Welle (10) des Faltsystems zum Falten des Hinterrades (14) auf den Hauptrahmen (1) vertikal ist, so dass das Hinterrad (14) in der gefalteten Position seitlich auf dem Hauptrahmen (1) aufliegt.

## Revendications

1. Bicyclette pliable à chargement frontal du type comprenant une surface de chargement dans sa partie avant, l'axe du volant avant (15) étant déplacé vers l'avant pour laisser de l'espace pour ladite surface et incorporant un système de direction indirecte, **caractérisée en ce qu'**elle comprend au moins un système de pliage pour plier sa roue avant (15) sur un bâti principal (1) au moyen d'un bras oscillant avant avec la surface de chargement (3) dans laquelle ladite roue avant (15) est incorporée autour d'un arbre rotatif avant (9) de sorte que, dans la position repliée, la roue avant (15) se superpose au bâti principal (1) et la surface de chargement (3) est située en dessous du bâti principal (1) et sert de surface de support sur laquelle repose l'ensemble de la bicyclette dans sa position repliée.

2. Bicyclette pliable à chargement frontal selon la revendication 1, **caractérisée en ce qu'**elle comprend un système de pliage pour plier la roue arrière (14) sur le bâti principal (1) au moyen d'un bras oscillant arrière (2) dans un arbre rotatif arrière (10) de sorte que, dans la position repliée, ladite roue arrière (14) se superpose au bâti principal (1).

3. Bicyclette pliable à chargement frontal selon la revendication 2, **caractérisée en ce que,** soit le bras oscillant avant de la surface de chargement (3) avec la roue avant (15), soit le bras oscillant arrière (2) avec la roue arrière (14), tourne par rapport au bâti principal (1) autour d'un arbre avant (9) ou d'un arbre arrière (10) qui n'est pas perpendiculaire audit bâti principal (1) de sorte que, dans une position repliée, la roue avant (15) ou la roue arrière (14) qui tourne autour dudit arbre non perpendiculaire est située de manière décalée par rapport à la verticale du bâti principal (1).

4. Bicyclette pliable à chargement frontal selon la revendication 3, **caractérisée en ce que** l'arbre non perpendiculaire au bâti principal (1) autour duquel tourne le bras oscillant avant (3) de la roue avant (15) ou le bras oscillant arrière (2) de la roue arrière (14) est incliné par rapport à l'horizontale de sorte que, dans une position repliée, la verticalité du bâti principal (1) par rapport à la surface de chargement du bras oscillant avant (3) est améliorée.

5. Bicyclette pliable à chargement frontal selon l'une quelconque des revendications précédentes, **caractérisée en ce qu'**une plate-forme (16) ou autre accessoire de chargement amovible sont fixés sur la surface de chargement du bras oscillant avant (3).

6. Bicyclette pliable à chargement frontal selon la revendication 5, **caractérisée en ce qu'**une plate-forme plate (16) qui, avec le bras oscillant avant (3) de la roue avant (15) dans la position repliée, est agencée sous la surface de chargement et sert de support à la bicyclette dans la position repliée, est fixée sur la surface de chargement du bras oscillant avant (3).

7. Bicyclette pliable à chargement frontal selon la revendication 6, **caractérisée en ce que** soit la surface de chargement du bras oscillant avant (3), soit une plate-forme de chargement (16), incorpore des roues à roulement (19) destinées à faciliter le transport de la bicyclette dans la position repliée.

8. Bicyclette pliable à chargement frontal selon la revendication 6 ou 7, **caractérisée en ce que** la plate-forme de chargement (16) est fixée à la surface de chargement du bras oscillant avant (3) au moyen d'une attache pivotante (17) de sorte qu'elle peut pivoter par rapport à la roue avant (15) pour optimiser de ce fait le pliage de la bicyclette et la base de support qu'elle fournit.

9. Bicyclette pliable à chargement frontal selon l'une quelconque des revendications précédentes, **caractérisée en ce que** le tube de guidon (5) peut être déplacé verticalement par rapport au bâti principal (1) et monté dans le bras oscillant avant (3) dans sa position repliée de sorte que ledit bras oscillant avant (3) est verrouillé mécaniquement par ledit tube de guidon (5), empêchant la bicyclette de revenir à sa position dépliée sans que le tube de guidon (5) n'ait d'abord été déplacé dans sa position déployée.

10. Bicyclette pliable à chargement frontal selon l'une quelconque des revendications 2 à 9, **caractérisée en ce que** le tube de selle (6) peut être déplacé verticalement par rapport au bâti principal (1) et monté dans le bras oscillant arrière (2) dans sa position repliée de sorte que le bras oscillant arrière (2) est verrouillé mécaniquement par ledit tube de selle (6), empêchant la bicyclette de revenir à sa position dépliée sans que le tube de selle (6) n'ait d'abord été déplacé dans sa position déployée.

11. Bicyclette pliable à chargement frontal selon l'une quelconque des revendications 2, 5, 6, 7, 8, 9 ou 10, **caractérisée en ce que** l'arbre arrière (10) du système de pliage pour plier la roue arrière (14) sur le bâti principal (1) est vertical de sorte que, dans la position repliée, ladite roue arrière (14) se superpose latéralement au bâti principal (1).
